# EUROPÄISCHE PATENTANMELDUNG

(11) **EP 4 516 862 A1**
(43) Veröffentlichungstag der Anmeldung: **05.03.2025**
(21) Anmeldenummer: 23194972.8
(22) Anmeldetag: 01.09.2023
(51) Int. Cl.: C09D 5/16, C04B 24/00, C09D 5/34

(54) **WÄSSRIGE BESCHICHTUNGSMASSE, BESCHICHTUNG, ERHALTEN AUS DER BESCHICHTUNGSMASSE, SUBSTRAT, ENTHALTEND DIE BESCHICHTUNG, SOWIE DIE VERWENDUNG DER WÄSSRIGEN BESCHICHTUNGSMASSE**

(71) Anmelder: DAW SE, 64372 Ober-Ramstadt (DE)
(72) Erfinder: Brenner, Thomas, 64367 Mühltal (DE); Befurt, Uwe, 64372 Ober-Ramstadt (DE)
(74) Vertreter: Metten, Karl-Heinz

(57) **Zusammenfassung**

Die vorliegende Erfindung betrifft eine wässrige Beschichtungsmasse, insbesondere Anstrichfarbe oder Putzmasse, enthaltend mindestens ein organisches und/oder anorganisches Pigment und/oder mindestens einen Füllstoff, mindestens ein polymeres organisches Bindemittel, 2-Octyl-2H-isothiazol-3-on (OIT), 4,5-Dichlor-2-octyl-2H-isothiazol-3-on (DCOIT), mindestens ein Additiv und Wasser sowie insbesondere auch Zinksulfid und/oder Zinkoxid. Der pH-Wert der erfindungsgemäßen wässrigen Beschichtungsmasse ist bevorzugt kleiner 11,0 und liegt insbesondere im Bereich von 7,5 bis 10,0. Ferner betrifft die Erfindung eine Beschichtung, erhalten aus der erfindungsgemäßen Beschichtungsmasse, sowie ein Substrat, enthaltend eine beschichtbare Oberfläche und auf dieser beschichtbaren Oberfläche die erfindungsgemäße Beschichtung. Schließlich betrifft die Erfindung die Verwendung der erfindungsgemäßen wässrigen Beschichtungsmasse für die Herstellung von gegen mikrobielle Schädigung geschützten Beschichtungen.

## Beschreibung

Die vorliegende Erfindung betrifft eine wässrige Beschichtungsmasse, insbesondere Putzmasse, Armierungsmasse, Spachtelmasse oder Anstrichfarbe. Ferner betrifft die Erfindung eine Beschichtung, erhalten oder erhältlich aus der erfindungsgemäßen Beschichtungsmasse, sowie ein Substrat, enthaltend eine beschichtbare Oberfläche und auf dieser beschichtbaren Oberfläche die erfindungsgemäße Beschichtung. Schließlich betrifft die Erfindung die Verwendung der erfindungsgemäßen wässrigen Beschichtungsmasse für die Filmkonservierung von Beschichtungsaufträgen.

Beschichtungen und Farbanstriche für Fassaden werden seit langem mit fungiziden und/oder algiziden Konservierungsmitteln ausgestattet, auch Filmkonservierungsmittel genannt. Die aus solchen Beschichtungsmassen erhaltenen Beschichtungen sollen auf diese Weise resistent gegen Befall mit Pilzen bzw. Algen gemacht werden.

Selbst die mit derartigen Filmkonservierungsmitteln ausgestatteten Beschichtungen neigen jedenfalls nach längerer Zeit dazu, den Befall mit Pilzen oder Algen nicht mehr vollends unterbinden zu können. Dies ist unter anderem auch dem Umstand geschuldet, dass die Filmkonservierungsmittel witterungsbedingt abgebaut und aus der Beschichtung ausgetragen werden. Hierdurch besteht jedoch die Gefahr, dass derartige Filmkonservierungsmittel in Kontakt mit Pflanzen oder Insekten geraten oder in das Ablauf-/Grundwasser gelangen. Letzteres ist insbesondere bei Einsatz solcher Filmkonservierungsmittel bedenklich, die aquatoxisch sind.

Interessanterweise ist durch den verstärkten Einsatz von Wärmedämmverbundsystemen die Problematik des Austragens bzw. Auswaschens von Filmkonservierungsmitteln aus Fassadenbeschichtungen nochmal in den Vordergrund getreten. Denn eine effektivere Wärmedämmung von Fassaden und die damit einhergehende Verminderung des Wärmestroms von innen nach außen, bringt mit sich, dass auf der Außenwand die Oberflächentemperaturen erniedrigt sind und somit der Taupunkt frühzeitiger und auch für längere Zeiträume unterschritten wird.

Es hat bislang nicht an Versuchen gefehlt, Beschichtungsmassen mit solchen Konservierungsmitteln auszustatten, die unter Umweltgesichtspunkten unbedenklich sind.

So wird in der EP 1 519 995 B1 eine Beschichtungsmasse mit einem pH-Wert von mindestens 11,0 zum Schutz gegen Mikroorganismenbefall von Oberflächen, die der Einwirkung von Feuchtigkeit oder Wasser ausgesetzt sind, offenbart, enthaltend ein in Mikrokapseln aus Formaldehyd-Melamin-Harz vorliegendes Biozid ausgewählt aus der Gruppe bestehend aus Zinkpyrithion, 4,5-Dichlor-2-octylisothiazolin-3-on, 3-Iod-2-propinyl-N-butylcarbamat, 2-n-Octylisothiazolin-3-on, Methyl-1H-benzimidazol-2-ylcarbamat, N2-t-Butyl-N4-ethyl-6-methyl-thio-1,3,5-triazin-2,4-diyldiamin, 2-Methylthio-4-butyl- amino-6-cyclopropyla-mino-s-triazin, 3-(4-Isopropylphenyl)-N,N-dimethylharnstoff und N'-(3,4-Dichlorphenyl)-N,N-dimethylharnstoff.

Der Fokus der EP 2 157 862 B1 liegt auf der Zurverfügungstellung weiterer Biozidzusammensetzungen, deren mikrobiozide Wirkkomponenten synergistisch zusammenwirken, wodurch sich die effektive Wirkstoffmenge verringern lassen soll. Hierfür wird eine Biozidzusammensetzung vorgeschlagen, enthaltend als mikrobiozide Wirkkomponenten Glutaraldehyd und ein oder mehrere Isothiazolin-3-onderivate ausgewählt aus der Gruppe bestehend aus N-Alkyl-1,2-benzisothiazolin-3-onen und 2-n-Octylisothiazolin-3-on.

Die bislang verfügbaren Fassadenbeschichtungssysteme lassen noch stets Wünsche offen. Der vorliegenden Erfindung hat daher die Aufgabe zugrunde gelegen, wässrige Beschichtungsmassen für die Beschichtung von insbesondere wärmegedämmten Fassaden verfügbar zu machen, die nicht mehr mit den Nachteilen des Stands der Technik behaftet sind und die insbesondere auf sehr umweltverträgliche und vorzugsweise gleichzeitig auch ressourcenschonende Weise Fassaden über einen längeren Zeitraum frei von visuell wahrnehmbarem Befall mit Mikroorganismen halten.

Demgemäß wurde eine wässrige Beschichtungsmasse gefunden, bestehend aus oder enthaltend, insbesondere enthaltend,
a) mindestens ein organisches und/oder anorganisches Pigment und/oder mindestens einen Füllstoff,
b) mindestens ein polymeres organisches Bindemittel,
c) 2-Octyl-2H-isothiazol-3-on (OIT),
d) 4,5-Dichlor-2-octyl-2H-isothiazol-3-on (DCOIT),
e) mindestens ein Additiv und
f) Wasser.

Bei der erfindungsgemäßen wässrigen Beschichtungsmasse handelt es sich bevorzugt um Putzmassen, Armierungsmassen, Spachtelmassen und Anstrichfarben.

In einer besonders geeigneten Ausführungsform umfassen die erfindungsgemäßen wässrigen Beschichtungsmassen ferner Zinksulfid und/oder Zinkoxid, insbesondere Zinksulfid (Komponente g)). Es hat sich überraschend gezeigt, dass die Kombination von OIT und DCOIT mit Zinksulfid und/oder Zinkoxid, insbesondere Zinksulfid, die Befallswahrscheinlichkeit einer aus der erfindungsgemäßen Beschichtungsmasse erhaltenen Beschichtung nochmals merklich verringert. Auch wird auf diese Weise die mikrobiologische Stabilität der erfindungsgemäßen wässrigen Beschichtungsmassen nochmals verbessert. Die Mitverwendung von Zinksulfid und/oder Zinkoxid erlaubt es, die Konzentration an OIT und DCOIT zu verringern, ohne Einbußen im Hinblick auf die Lösung der der Erfindung zugrunde liegenden Aufgabe in Kauf nehmen zu müssen. Von besonderem Vorteil ist hierbei auch, dass das bei Mitverwendung von Zinksulfid auf Titandioxid als Weißpigment entweder vollständig oder aber in erheblichem Umfang verzichtet werden kann, um gleichwohl noch zu einer Beschichtungsmasse mit hinreichendem Deckvermögen zu gelangen. Dies gestattet es, nicht mehr auf die energieaufwendige Herstellung von Titandioxid angewiesen zu sein. Zusätzlich wird in einer bevorzugten Ausführungsform Bariumsulfat zur erfindungsgemäßen wässrigen Beschichtungsmasse gegeben. Insbesondere wenn in Kombination mit Zinksulfid eingesetzt, stellt sich ein sehr zufriedenstellendes Deckvermögen bei gleichzeitig hinreichender Weißkraft ein.

Für viele Anwendungen hat es sich als zweckmäßig erwiesen, dass die erfindungsgemäße wässrige Beschichtungsmasse zusätzlich mit mindestem einem Verdicker ausgestattet ist. Geeignete Verdicker können insbesondere ausgewählt werden aus der Gruppe bestehend aus Polyacrylat-Verdickern, Polyurethan-Verdickern, Polyharnstoff-Verdickern, Polyvinylalkohol-Verdickern, Polyetherpolyol-Verdickern, organisch modifizierten Schichtsilikat-Verdickern, nicht organisch modifizierten Schichtsilikat-Verdickern, Stärkeether-Verdickern, Celluloseether-Verdickern, Polysaccharid-Verdickern, bevorzugt Xanthan, Fettalkoholethoxylat-Verdickern und beliebigen Mischungen hiervon. Für die erfindungsgemäßen wässrigen Beschichtungsmassen kommen als Verdicker insbesondere Cellulose-Verdicker, insbesondere Hydroxyethylcellulose, Polysaccharid-Verdicker, insbesondere Xanthan, und Polyurethan-Verdicker in Betracht.

In einer weiteren Ausführungsform der erfindungsgemäßen wässrigen Beschichtungsmasse kann diese ferner Wasserglas und/oder Kieselsol, insbesondere Wasserglas, enthalten (Komponente i)).

Auch können die erfindungsgemäßen Putzmassen zusätzlich mindestens ein organisches und/oder anorganisches Fasermaterial (Komponente h) Enthalten. Geeignete Fasern umfassen organisches und/oder oder anorganisches Fasermaterial. Als anorganische Fasern kommen zum Beispiel Glasfasern und/oder Mineralfasern, beispielsweise Basaltfasern, in Frage, als organische Fasern zum Beispiel Polyolefinfasern wie Polypropylenfasern, Polyamidfasern, Carbonfasern, Cellulosefasern und/oder Acrylfasern. Besonders geeignete Fasern liegen zweckmäßigerweise als sogenannte Schnittfasern vor.

Die erfindungsgemäßen wässrigen Beschichtungsmassen zeichnen sich bevorzugt dadurch aus, dass sie die der Erfindung zugrunde liegende Aufgabe lösen, ohne - abgesehen von den Komponenten c) und d) - auf weitere Filmkonservierungsmittel angewiesen zu sein. Die erfindungsgemäßen wässrigen Beschichtungsmassen sind demgemäß insbesondere frei von Filmkonservierungsmitteln, die in der Kategorie 7 der Artikel 95 Liste (Stand 22. Mai 2023) der ECHA (European Chemicals Agency) aufgeführt sind, beispielsweise 2-Thiazol-4-yl-1H-benzoimidazol (Thiabendazol), Diuron, Terbutryn, N-(Dichlorofluoromethylthio)-N',N'-dimethyl-N-phenylsulfamid (Dichlofluanid), Silbernitrat, Carbendazim, p-[(Diiodome-thyl)sulfonyl]-toluol, Dimethyloctadecyl-[3-(trimethoxysilyl)propyl]ammoniumchlorid, 3-(4-Isopropyl-phenyl)-1,1-dimethylharnstoff (Isoproturon), 1-[[2-(2,4-Dichlorophenyl)-4-propyl-1,3-dioxolan-2-yl]methyl]-1H-1,2,4-triazol (Propiconazole), 1-(4-Chlorophenyl)-4,4-dimethyl-3-(1,2,4-triazol-1-ylmethyl)pentan-3-ol (Tebuconazole), 2-Butyl-benzo[d]isothia-zol-3-on (BBIT), Polymeres quaternäres Ammoniumbromid (PQ Polymer), 3-Iodo-2-propy-nylbutylcarbamat (IPBC), Benzoesäure, N-(Trichloromethylthio)phthalamid (Folpet), Pyridin-2-thiol-1-oxid, Natriumsalz (Natriumpyrithion), Zinkpyrithion, Silberborphosphat-Glas, Silberchlorid, Silberphosphat-Glas, Silber/Zinkzeolithe, Silberzeolithe, Fludioxonil oder Methyl-(E)-2-{2[6-(2-cyanophenoxy)pyrimidin-4-yloxyl]phenyl}-3-methoxyacrylat (Azoxystrobin).

In weiteren, zweckmäßigen Ausführungsvarianten können die erfindungsgemäßen wässrigen Beschichtungsmassen zusätzlich auch frei von organischen Topfkonservierungsmitteln sein, insbesondere solchen, die in der Kategorie 6 der Artikel 95 Liste (Stand 22. Mai 2023) der ECHA (European Chemicals Agency) aufgeführt sind, also beispielsweise (Ethylendioxy)dimethanol, Hexa-2,4-diensäure (Sorbinsäure), N-(Trichloromethylthio)phthalimid (Folpet), Tetrahydro-3,5-dimethyl-1,3,5-thiadiazin-2-thion (Dazomet), N-(3-Aminopropyl)-N-docecylpropan-1,3-diamin, 2,2'-Dithiobis-[N-methylbenzamid] (DTBMA), Biphenyl-2-ol, Natrium-2-biphenylat, Methenamin-3-chloroallylochlorid (CTAC), 2,2',2"-(Hexahydro-1,3,5-triazin-1,3,5-triyl)-triethanol (HHT), N,N'-Methylenebismorpholin (MBM), 1,3-Bis(hydroxymethyl)-5,5-dimethyl-imidazolidin-2,4-dion (DMD-MH), 7a-Ethyldihydro-1H,3H,5H-oxazolo[3,4-c]oxazol (EDHO), Dodecylguanidin-monohydrochlorid, Kalium-2-biphenylat, p-[(Diiodomethyl)-sulfonyl]toluol, Kalium-(E,E)-hexa-2,4-dienoat (Kaliumsorbat), 2-Brom-2-(brommethyl)pentanedinitril (DBDCB), 3-Iodo-2-propynylbutylcarbamat (IPBC), Natrium-N-(hydroxymethyl)glycinat, 2-Butyl-benzo[d]-isothiazol-3-on (BBIT), cis-1-(3-Chloroallyl)-3,5,7-triaza-1-azoniaadamantanchlorid (cis CTAC), 2-Methyl-1,2-benzothiazol-3(2H)-on (MBIT), 1,2-Benzisothiazol-3(2H)-on (BIT), Tetrahydro-1,3,4,6-tetrakis-(hydroxymethyl)-imidazol(4,5-d)imidazol-2,5(1H,3H)-dion (TMAD), Didecyldimethylammoniumchlorid (DDAC), Dodecylguanidin-monohydrochloride, Trimethyl-1,3,5-Triazin-1,3,5(2H,4H,6H)-triethanol (HPT), Tetrakis(hydroxymethyl)-phosphoniumsulfat (THPS), 3,3-Methylenbis(5-methyloxazolindin) (MBO), 2-Methyl-2H-isothiazol-3-on (MIT), 5-Chloro-2-methyl-2H-isothiazol-3-on (CIT), (Ethylendioxy)-dimethanol, 2,2-Dibrom-2-cyanoacetamid (DBNPA), Natriumpyrithion, Zinkpyrithion, (Benzyloxy)methanol, Natrium-p-chloro-m-cresolat, 2-Phenoxyethanol, Benzylalkohol, Ethanol, Biphenyl-2-ol, Bronopol, Chlorocresol, Ameisensäure, Glutaraldehyd, Sorbinsäure, Wasserstoffperoxoid oder Milchsäure.

In den erfindungsgemäßen wässrigen Beschichtungsmassen sind bevorzugt mindestens 0,01 Gew.-%, bevorzugt mindestens 0,04 oder 0,05 Gew.-% und besonders bevorzugt mindestens 0,09 oder 0,1 Gew.-% an DCOIT, insbesondere im Bereich von 0,04 oder 0,05 Gew.-% bis 0,3 Gew.-%, an DCOIT enthalten, jeweils bezogen auf das Gesamtgewicht der Beschichtungsmasse. Alternativ sowie insbesondere zusätzlich kann vorgesehen sein, dass in den erfindungsgemäßen wässrigen Beschichtungsmassen mindestens 0,01 Gew.-%, bevorzugt mindestens 0,04 oder 0,05 Gew.-% und besonders bevorzugt mindestens 0,09 oder 0,1 Gew.-% an OIT, insbesondere im Bereich von 0,04 oder 0,05 Gew.-% bis 0,3 Gew.-%, an OIT enthalten sind, jeweils bezogen auf das Gesamtgewicht der Beschichtungsmasse.

Als besonders zweckmäßig hat sich erwiesen, insbesondere zusätzlich zu den vorangehend genannten Bereichsgrenzen von OIT und/oder DCOIT, für Zinksulfid und/oder Zinkoxid, insbesondere Zinksulfid, mindestens 1,0 Gew.-%, bevorzugt mindestens 1,5 Gew.-% und besonders bevorzugt mindestens 2,25 Gew.-% an Zinksulfid und/oder Zinkoxid, insbesondere Zinksulfid, einzusetzen, jeweils bezogen auf das Gesamtgewicht der Beschichtungsmasse. In besonders zweckmäßigen Ausführungsformen liegt Zinksulfid und/oder Zinkoxid, insbesondere Zinksulfid, in Mengen im Bereich von 1 Gew.-% bis 10 Gew.-%, insbesondere im Bereich von 1,5 bis 9,0 Gew.-% und bevorzugt von 2,25 bis 8,0 Gew.-% vor, jeweils bezogen auf das Gesamtgewicht der Beschichtungsmasse.

Für erfindungsgemäße wässrige Putzmassen wird bevorzugt zurückgegriffen auf solche, enthaltend
mindestens 0,01 Gew.-%, bevorzugt mindestens 0,04 oder 0,05 Gew.-% und besonders bevorzugt mindestens 0,09 oder 0,1 Gew.-% an DCOIT, insbesondere im Bereich von 0,04 oder 0,05 Gew.-% bis 0,3 Gew.-%, an DCOIT, jeweils bezogen auf das Gesamtgewicht der Beschichtungsmasse, und/oder, insbesondere und,
mindestens 0,01 Gew.-%, bevorzugt mindestens 0,04 oder 0,05 Gew.-% und besonders bevorzugt mindestens 0,09 oder 0,1 Gew.-% an OIT, insbesondere im Bereich von 0,04 oder 0,05 Gew.-% bis 0,3 Gew.-%, an OIT, jeweils bezogen auf das Gesamtgewicht der Beschichtungsmasse, und/oder, insbesondere und,
mindestens 1 Gew.-%, bevorzugt mindestens 1,5 Gew.-% und besonders bevorzugt mindestens 2,25 Gew.-% an Zinksulfid, jeweils bezogen auf das Gesamtgewicht der Beschichtungsmasse.

In besonders zweckmäßigen Ausführungsformen liegt Zinksulfid und/oder Zinkoxid, insbesondere Zinksulfid, in den erfindungsgemäßen wässrigen Putzmassen in Mengen im Bereich von 1 Gew.-% bis 10 Gew.-%, insbesondere im Bereich von 1,5 bis 9,0 Gew.-% und bevorzugt von 2,25 bis 8,0 Gew.-% vor, jeweils bezogen auf das Gesamtgewicht der Beschichtungsmasse.

Für erfindungsgemäße wässrige Anstrichfarben wird bevorzugt zurückgegriffen auf solche, enthaltend
mindestens 0,01 Gew.-%, bevorzugt mindestens 0,04 oder 0,05 Gew.-% und besonders bevorzugt mindestens 0,1 oder 0,2 Gew.-% an DCOIT, insbesondere im Bereich von 0,05 oder 0,1 Gew.-% bis 0,3 Gew.-%, an DCOIT, jeweils bezogen auf das Gesamtgewicht der Beschichtungsmasse, und/oder, insbesondere und,
mindestens 0,01 Gew.-%, bevorzugt mindestens 0,04 oder 0,05 Gew.-% und besonders bevorzugt mindestens 0,1 oder 0,2 Gew.-% an OIT, insbesondere im Bereich von 0,05 oder 0,1 Gew.-% bis 0,3 Gew.-%, an OIT, jeweils bezogen auf das Gesamtgewicht der Beschichtungsmasse, und/oder, insbesondere und,
mindestens 1,0 Gew.-%, bevorzugt mindestens 1,5 Gew.-% und besonders bevorzugt mindestens 2,25 Gew.-% an Zinksulfid, jeweils bezogen auf das Gesamtgewicht der Beschichtungsmasse.

In besonders zweckmäßigen Ausführungsformen liegt Zinksulfid und/oder Zinkoxid, insbesondere Zinksulfid, in den erfindungsgemäßen wässrigen Anstrichfarben in Mengen im Bereich von 1 Gew.-% bis 10 Gew.-%, insbesondere im Bereich von 1,5 bis 9,0 Gew.-% und bevorzugt von 2,25 bis 8,0 Gew.-% vor, jeweils bezogen auf das Gesamtgewicht der Beschichtungsmasse.

Die überraschenden Effekte im Zusammenhang mit einer ausgeprägten Filmkonservierung von aus den erfindungsgemäßen wässrigen Beschichtungsmassen erhaltenen Beschichtungen, vorzugsweise bei Verwendung geringer Konzentrationen an OIT und DCOIT, wie vorangehend ausgeführt, stellen sich insbesondere auch dadurch ein, dass die Komponente c) geträgert oder verkapselt, insbesondere mikroverkapselt, in der Beschichtungsmasse vorliegt und/oder, insbesondere und, dass die Komponente d) geträgert oder verkapselt, insbesondere mikroverkapselt, in der Beschichtungsmasse vorliegt. Hierbei hat es sich als besonders zweckmäßig erwiesen, dass die Komponenten c) und d) jeweils separat geträgert oder verkapselt, insbesondere mikroverkapselt, in der Beschichtungsmasse vorliegen. Alternativ kann in einigen Ausführungsformen auch vorgesehen sein, dass die Komponenten c) und d) gemeinsam verkapselt, insbesondere mikroverkapselt, in der Beschichtungsmasse vorliegen. Besonders bevorzugt liegen die Komponenten c) und d) jeweils separat geträgert oder verkapselt, insbesondere mikroverkapselt, in der erfindungsgemäßen Beschichtungsmasse vor. Für die allermeisten Anwendungen hat es sich als besonders zweckmäßig erwiesen, Zinksulfid und/oder Zinkoxid, insbesondere Zinksulfid, in den erfindungsgemäßen wässrigen Beschichtungsmassen nicht in geträgerter und auch nicht in verkapselter Form einzusetzen.

Für die Verkapselung kann als Kapselmaterial auf z.B. Aminoplast-Harze, insbesondere Melamin-Formaldehyd-Harze, zurückgegriffen werden.

Grundsätzlich kommen als Material für die Bildung von Kapseln, insbesondere Mikrokapseln, natürliche, halbsynthetische und synthetische Materialien in Betracht. Für die Verkapselung von OIT und DCOIT kann unter den natürlichen Materialien z.B. zurückgegriffen werden auf Gummi arabicum, Agar, Agarose, Maltodextrin, Natriumalginat, Calciumalginat, Dextran, Fette, Fettsäuren, Cetylalkohol, Milchfeststoffe, Molassen, Gelatine, Gluten, Albumin, Schellack, Stärken, Caseinate, Stearine, Saccharose, Wachse, wie Bienenwachs, Carnaubawachs und Spermacetiwachs.

Geeignete halbsynthetische Kapselmaterialien können z.B. ausgewählt werden aus der Gruppe bestehend aus Celluloseacetat, Celluloseacetatbutyrat, Celluloseacetatphthalat, Cellulosenitrat, Ethylcellulose, Hydroxypropylcellulose, Hydroxypropylmethylcellulose, Hydroxypropylmethylcellulosephthalat, Methylcellulose, Natriumcarboxymethylcellulose, hydrierter Talg, Myristylalcohol, Glycerin mono- oder -dipalmitat, hydriertes Ricinusöl, Glycerylmono- oder -tristearate und 12-Hydroxystearylalkohol.

Unter den synthetischen Materialien für die Verkapselung, insbesondere Mikroverkapselung, kommen z.B. Formaldehyd-Melamin-Harze, Acrylpolymere und -copolymere, wie Polyacrylamid, Polyalkylcyanoacrylat, und Poly-(ethylenvinylacetat), Aluminiummonostearat, Carboxyvinylpolymere, Polyamide, Poly-(methylvinylether-maleinsäurean-hydrid), Poly-(adipyl-L-lysin), Polycarbonate, Polyterephthalamid, Poly-(vinylacetatphthalat), Poly-(terephthaloyl- L-lysin), Polyarylsulfone, Poly-(methylmethacrylat), Poly-(ε-caprolacton), Polyvinylpyrrolidon, Polydimethylsiloxan, Polyoxyethylene, Polyester, Polyglykolsäure, Polymilchsäure und deren Copolymere, Polyglutaminsäure, Polylysin, Polystyrol, Poly-(styrolacrylnitril), Polyimide und Polyvinylalkohol in Betracht. Geeignete Verfahren für die Verkapselung, insbesondere Mikroverkapselung, finden sich z.B. bei C.A. Finch, R. Bodmeier, Microencapsulation, Ullmann's Encyclopedia of Industrial Chemistry, 6. Auflage 2001, Elektronic Release, beschrieben.

Geeignete partikuläre Trägermaterialien für OIT und DCOIT stellen z.B. Granulat-Teilchen, die mit Hohlräumen ausgestattet sind, dar. Hierbei kann es sich z.B. um geschäumte keramische Materialien, um Blähtone oder um Zeolithe handeln. In diesen Trägermaterialien können OIT und DCOIT in feindisperser, flüssiger oder fester Phase eingeschlossen vorliegen. Geschäumten keramische Materialien und Verfahren zu ihrer Herstellung sind u.a. aus der EP 0758633 B1 bekannt. Geeignete Zeolith-Trägermaterialien sind in der DE 43 37 844 A1 beschrieben. Die für OIT und DCOIT genannten partikulären Trägermaterialien verfügen vorzugsweise über eine durchschnittliche, insbesondere absolute, Teilchengröße im Bereich von 10 bis 100 µm, insbesondere im Bereich von 20 bis 50 µm.

Durch die Verkapselung bzw. die Trägerung von OIT und DCOIT gelingt die verzögerte Freisetzung dieser Substanzen aus der aus der erfindungsgemäßen wässrigen Beschichtungsmasse erhaltenen Beschichtung. Über die verwendeten Materialien und die eingestellte Kapselwanddicke kann das Ausmaß der verzögerten Freisetzung von OIT und DCOIT bei separater Verkapselung sehr gut auf die jeweilige Beschichtungsmasse, den Untergrund und die Beschichtungsdicke abgestimmt werden.

Die Komponente c) kann in einer Ausführungsform nicht geträgert und nicht verkapselt neben einer geträgerten oder verkapselten, insbesondere mikroverkapselten, Komponente d) vorliegen. Alternativ kann die Komponente d) in einer weiteren Ausführungsform nicht geträgert und nicht verkapselt neben einer geträgerten oder verkapselten, insbesondere mikroverkapselten, Komponente c) vorliegen. Selbstverständlich ist es auch möglich, dass die Komponente c) und die Komponente d) nicht geträgert und nicht verkapselt in den erfindungsgemäßen Beschichtungsmassen eingesetzt werden.

Für die in den erfindungsgemäßen wässrigen Beschichtungsmassen verwendeten Additive kann zurückgegriffen werden auf solche, ausgewählt ist aus der Gruppe bestehend aus Verdickern, Koaleszenzmitteln, Entschäumern, Stabilisatoren, pH-Einstellmitteln, Netz- und Dispergiermitteln, Hydrophobierungsmitteln, Mattierungsmitteln, insbesondere Fällungskieselsäure, Oberflächenadditiven, insbesondere Silikonoberflächenadditiven, beispielsweise polyethermodifiziertes Polymethylalkylsiloxan und/oder Silikonpolyether-Copolymere, und Mischungen dieser Verbindungen.

Geeignete Verdicker können ausgewählt werden aus der Gruppe bestehend aus Polyacrylat-Verdickern, Polyurethan-Verdickern, Polyharnstoff-Verdickern, Polyvinylalkohol-Verdickern, Polyetherpolyol-Verdickern, organisch modifizierten Schichtsilikat-Verdickern, nicht organisch modifizierten Schichtsilikat-Verdickern, Stärkeether-Verdickern, Celluloseether-Verdickern, Polysaccharid-Verdickern, bevorzugt Xanthan, Fettalkoholethoxylat-Verdickern und beliebigen Mischungen hiervon. Für die erfindungsgemäßen wässrigen Beschichtungsmassen kommen als Verdicker insbesondere Cellulose-Verdicker, insbesondere Hydroxyethylcellulose, Polysaccharid-Verdicker, insbesondere Xanthan, und/oder, insbesondere und, Polyurethan-Verdicker in Betracht.

Geeignete Koaleszenzmittel umfassen z.B. Propylenglykol, Butylglykol, 2,2,4-Trimethyl-1,3-pentandiolmonoisobutyrat oder 2,2,4-Trimethyl-1,3-pentandioldiisobutyrat, 2,2,4-Trimethyl-1,3-pentandiolmonoisobutyrat oder Glykoletherderivate sowie deren beliebige Mischungen. Koaleszenzmittel werden im Allgemeinen eingesetzt, um die Mindestfilmbildungstemperatur von Farben auf eine Temperatur zu senken, die den gewünschten Anwendungsbedingungen entspricht (z. B. eine Mindestfilmbildungstemperatur von 5 °C für eine Anwendung im Freien).

Geeignete Hydrophobierungsmittel umfassen z.B. Wachse, beispielsweise in Form von, insbesondere emulgatorfreien, Wachsdispersionen, und/oder Silikonpolymere, beispielsweise in emulgierter oder dispergierter Form.

Für die erfindungsgemäßen wässrigen Beschichtungsmassen geeignete Netz- und/oder Dispergiermittel können ausgewählt werden aus der Gruppe bestehend aus Polycarboxylaten, insbesondere Salze von Polyacrylsäuren, Polyetherphosphaten, Polyphosphaten, insbesondere lineare Polyphosphate und/oder zyklische Metaphosphate, Polyacrylat-Copolymeren, Polysiloxanen, Fettalkoholsulfaten, ethoxylierten Fettalkoholen, Alkylphosphonaten und beliebigen Mischungen hiervon.

In den erfindungsgemäßen wässrigen Beschichtungsmassen wird insbesondere auf solche polymeren organischen Bindemittel zurückgegriffen, die ausgewählt sind aus der Gruppe bestehend aus Vinylacetat/Ethylen-Copolymeren, Copolymeren auf Basis von Vinylaromaten, insbesondere gebildet aus Styrol und (Meth)acrylaten, vorzugsweise Butylacrylaten, Copolymeren auf Basis von Acrylaten und gegebenenfalls Methacrylaten, insbesondere Reinacrylate, Hybridbindemitteln, insbesondere in Form wässriger Organosilikat-Hybriddispersionen, und beliebigen Mischungen hiervon. In diesen erfindungsgemäßen wässrigen Beschichtungsmassen liegen bevorzugt als polymere organische Bindemittel mindestens ein Reinacrylat, insbesondere Acryl/Methacrylsäureester-Copolymer, und mindestens ein Hybrid-Bindemittel vor.

Als besonders überraschend hat sich herausgestellt, dass die der Erfindung zugrunde liegende Aufgabe sich dadurch besonders zufriedenstellend und zuverlässig lösen lässt, wenn diese einen pH-Wert kleiner 11,0, bevorzugt von nicht mehr als 10,75 und besonders bevorzugt von nicht mehr als 10,5 aufweist. Dies ist umso überraschender, als üblicherweise hohe pH-Werte, d.h. pH-Werte oberhalb von 11,0 eingestellt werden, um ein für das Gedeihen von Mikroorganismen abträgliches Milieu zu erzeugen.

Die der Erfindung zugrunde liegende Aufgabe wird auch durch eine Beschichtung gelöst, erhalten oder erhältlich aus einer erfindungsgemäßen Beschichtungsmasse, insbesondere wie vorangehend spezifiziert. Auch wird die der Erfindung zugrunde liegende Aufgabe gelöst durch ein Substrat, enthaltend eine beschichtbare Oberfläche und auf dieser beschichtbaren Oberfläche eine erfindungsgemäße Beschichtung.

Die erfindungsgemäßen wässrigen Beschichtungsmassen, insbesondere in Form von Putzmassen, Armierungsmassen, Spachtelmassen oder Anstrichfarben, eignen sich für die Herstellung von gegen mikrobielle Schädigung geschützten Beschichtungen, insbesondere für die Herstellung von Beschichtungen, die eine Resilienz gegen Algen- und/oder, insbesondere und, Pilzwachstum aufweisen. Die erfindungsgemäßen wässrigen Beschichtungsmassen können wirksam für die Filmkonservierung von Beschichtungsaufträgen, insbesondere von Farb- oder Putzbeschichtungen, eingesetzt werden, vorzugsweise als Bestandteil von Wärmedämmverbundsystemen.

Mit der vorliegenden Erfindung geht die überraschende Erkenntnis einher, dass sich mit den aufgefundenen erfindungsgemäßen wässrigen Beschichtungsmassen Beschichtungen oder Überzüge erhalten lassen, die wirksam gegen Befall mit Mikroorganismen bzw. gegen mikrobielle Schädigung z.B. durch Algen- oder Pilzwachstum geschützt sind. Auf diese Weise lässt sich die ursprüngliche Oberflächenqualität über einen langen Zeitraum erhalten, und zwar ohne auf herkömmliche Filmkonservierungsmittel wie z.B. Carbendazim, Zinkpyrithion, Terbutryn oder Isoproturon angewiesen zu sein.

### Ausführungsbeispiele:

**Tabelle 1: Rezeptur 1 (Anstrichfarbe; erfindungsgemäß)**

| Bezeichnung | Chemische Zusammensetzung | Einsatzmenge (Gew.-%) |
|---|---|---|
| Wasser | | 15,50 |
| pH-Einstellmittel (Additiv) | Natriumhydroxid (20 Gew.-%-ig) | 0,10 |
| Anorganisches Pigment | Titandioxid | 15,00 |
| Füllstoffe | calcitische und silikatische Füllstoffe | 34,50 |
| Bindemittel | wässrige Organosilikat-Hybriddispersion (FG = 45 Gew.-%-ig) | 10,00 |
| Bindemittel | wässrige Acryl-/Methacrylsäureester-Copolymer-Dispersion (FG = 46 Gew.-%-ig) | 12,00 |
| Verdicker (Additiv) | Celluloseether-, Polysaccharid- und Polyurethan-Verdicker | 0,45 |
| Netz- und Dispergiermittel (Additiv) | Acrylsäure-Copolymer | 1,40 |
| sonstige Additive | Entschäumer, Hydrophobierungsmittel, Koaleszenzmittel | 4,35 |
| Topfkonservierungsmittel | 2-Methyl-2H-isothiazol-3-on und 1,2-Benzisothiazol-3(2H)-on (1:1) (je 5 Gew.-%-ig) (je 100 ppm) | 0,20 |
| Filmkonservierungsmittel | 2-Octyl-2H-isothiazol-3-on (OIT) (10 Gew.-%-ig) (2000 ppm) | 2,00 |
| Filmkonservierungsmittel | 4,5-Dichlor-2-octyl-2H-isothiazol-3-on (DCOIT) (10 Gew.-%-ig) (2000 ppm) | 2,00 |
| | Zinksulfid (25.000 ppm) | 2,50 |
| | | 100,00 |

Die erfindungsgemäße wässrige Anstrichfarbe wurde durch fachübliches Vermischen der in Tabelle 1 wiedergegebenen Komponenten hergestellt. Der pH-Wert der Rezeptur lag bei 8,5.

**Tabelle 2: Rezeptur 2 (Putzmasse; erfindungsgemäß)**

| Bezeichnung | Chemische Zusammensetzung | Einsatzmenge (Gew.-%) |
|---|---|---|
| Wasser | | 9,33 |
| pH-Einstellmittel (Additiv) | Natronlauge (20 %-ig) | 0,02 |
| Anorganisches Pigment | Titandioxid | 0,70 |
| Füllstoffe | calcitische und silikatische Füllstoffe; Körnung | 70,00 |
| Bindemittel | wässrige Vinylacetat/Etylen/Methacrylsäureester-Copolymer-Dispersion (52 Gew.-%-ig) | 10,00 |
| Verdicker (Additiv) | Celluloseether-Verdicker, Bentonit-Verdicker | 0,18 |
| Netz- und Dispergiermittel (Additiv) | Polycarboxylat (40 Gew.-%-ig) | 0,12 |
| sonstige Additive | Entschäumer, Hydrophobierungsmittel, Koaleszenzmittel | 4,35 |
| Fasermaterial | Fasern | 0,60 |
| Topfkonservierungsmittel | 2-Methyl-2H-isothiazol-3-on und 1,2-Benzisothiazol-3(2H)-on (1:1) (je 5 Gew.-%-ig) (je 100 ppm) | 0,20 |
| Filmkonservierungsmittel | 2-Octyl-2H-isothiazol-3-on (OIT) (10 Gew.-%-ig) (1000 ppm) | 1,00 |
| Filmkonservierungsmittel | 4,5-Dichlor-2-octyl-2H-isothiazol-3-on (DCOIT) (10 Gew.-%-ig) (1000 ppm) | 1,00 |
| | Zinksulfid (25.000 ppm) | 2,50 |
| | | 100,00 |

Die erfindungsgemäße wässrige Putzmasse wurde durch fachübliches Vermischen der in Tabelle 2 wiedergegebenen Komponenten hergestellt. Der pH-Wert der Rezeptur lag bei 8,5.

Aus den erfindungsgemäßen wässrigen Beschichtungsmassen gemäß den vorangehend geschilderten Rezepturen sowie aus den den Tabellen 3 und 4 zu entnehmenden Rezepturen (siehe jeweils Fußnote 3)) wurden Beschichtungsaufträge hergestellt. Als Substratunterlage diente ein Wärmedämmverbundsystemaufbau, umfassend eine 10 cm dicke EPS-Dämmplatte (Capatect Polystyrol-Dämmplatte mit einer Wärmeleitfähigkeit von mindestens 0,04 W/(mK)), ein Armierungsgewebe (Capatect-Gewebe 650), das in einer zementgebundenen Klebe- und Armierungsmasse (Capatect Klebe- und Armierungsmasse 186 M) eingebettet wurde. Hierauf wurde eine Grundierung (CapaGrund Universal im Fall der Anstrichfarbe gemäß Tabelle 1 und Putzgrund 610 im Fall der Putzmasse gemäß Tabelle 2) aufgetragen. Die Capatect- und CapaGrund- und Putzgrund-Produkte stammten von der Caparol Farben Lacke Bautenschutz GmbH, Ober-Ramstadt, Deutschland. Die Platten wurden im Anschluss einer Freibewitterung auf einem Betriebsgelände der Patentanmelderin ausgesetzt (in 90 Grad Aufhängung Richtung Westen). Der Aufwuchs von Algen und Pilzen wurde über einen Zeitraum von 10 Jahren auf den Oberflächen der erhaltenen Testkörper beobachtet. Die Beurteilung der Intensität des mikrobiologischen Bewuchses auf den Freibewitterungsplatten wurde bestimmt nach DIN EN 16492:2014-09 "Beschichtungsstoffe - Bewertung von optischen Oberflächenveränderungen verursacht durch Pilze und Algen auf Beschichtungen; Deutsche Fassung EN 16492:2014". Mit den erhaltenen Beschichtungsaufbauten konnte über eine Bewitterungszeit von 10 Jahren das folgende Ergebnis erzielt werden:

**Tabelle 3: Anstrichfarbe - Zunahme der Intensität des Bewuchses mit der Zeit nach DIN EN 16492 beurteilt nach EN ISO 4628-1:2003, 3.4**

| Jahre in der Freibewitterung | Ohne Konservierung ^{1) 3)} | 1000 ppm DCOIT, 1000 ppm OIT, 25000 ppm ZnS ³⁾ | 1000 ppm DCOIT, 1000 ppm OIT³⁾ | 2000 ppm DCOIT, 2000 ppm OIT, 25000 ppm ZnS ²⁾ | 2000 ppm DCOIT, 2000 ppm OIT ³⁾ |
|---|---|---|---|---|---|
| 1 | 0 | 0 | 0 | 0 | 0 |
| 2 | 1 | 0 | 0 | 0 | 0 |
| 3 | 2 | 0 | 1 | 0 | 1 |
| 4 | 3 | 1 | 2 | 0 | 2 |
| 5 | 4 | 2 | 2 | 1 | 2 |
| 6 | 5 | 2 | 3 | 1 | 2 |
| 7 | 5 | 3 | 3 | 2 | 3 |
| 8 | 5 | 3 | 4 | 3 | 4 |
| 9 | 5 | 3 | 5 | 3 | 4 |
| 10 | 5 | 3 | 5 | 3 | 4 |
| Summenzahl | 35 | 17 | 25 | 13 | 22 |

| | | | | | |
|---|---|---|---|---|---|
| 1) nicht erfindungsgemäß 2) Rezeptur gemäß Tabelle 1 3) Die eingesetzten Rezepturen basierten auf der Rezeptur gemäß Tabelle 1; abgesehen von den unterschiedlichen Mengen an Konservierungsmittel und gegebenenfalls Zinksulfid wurde allein die Menge an Wasser entsprechend angepasst, um zu einer Gesamtmenge von 100,00 Gew.-% zu gelangen. | | | | | |

**Tabelle 4: Putzmasse - Zunahme der Intensität des Bewuchses mit der Zeit nach DIN EN 16492 beurteilt nach EN ISO 4628-1:2003, 3.4**

| Jahre in der Freibewitterung | Ohne Konservierung ^{1) 3)} | 800 ppm Carbendazim, 900 ppm Terbutryn, 270 ppm OIT ^{1) 3)} | 500 ppm DCOIT, 500 ppm OIT, 25000 ppm ZnS ³⁾ | 500 ppm DCOIT, 500 ppm OIT ³⁾ | 750 ppm DCOIT, 750 ppm OIT, 25000 ppm ZnS ³⁾ | 750 ppm DCOIT, 750 ppm OIT ³⁾ | 1000 ppm DCOIT, 1000 ppm OIT, 25000 ppm ZnS ²⁾ | 1000 ppm DCOIT, 1000 ppm OIT ³⁾ |
|---|---|---|---|---|---|---|---|---|
| 1 | 0 | 0 | 0 | 0 | 0 | 0 | 0 | 0 |
| 2 | 2 | 0 | 0 | 0 | 0 | 0 | 0 | 0 |
| 3 | 3 | 1 | 0 | 1 | 0 | 1 | 0 | 0 |
| 4 | 5 | 1 | 1 | 1 | 1 | 1 | 0 | 0 |
| 5 | 5 | 2 | 2 | 2 | 1 | 1 | 0 | 1 |
| 6 | 5 | 2 | 3 | 3 | 2 | 2 | 1 | 2 |
| 7 | 5 | 2 | 3 | 4 | 2 | 3 | 1 | 2 |
| 8 | 5 | 3 | 3 | 4 | 3 | 4 | 1 | 3 |
| 9 | 5 | 3 | 3 | 5 | 3 | 5 | 1 | 4 |
| 10 | 5 | 4 | 3 | 5 | 3 | 5 | 2 | 5 |
| Summenzahl | 40 | 18 | 18 | 25 | 15 | 22 | 6 | 17 |

| | | | | | | | | |
|---|---|---|---|---|---|---|---|---|
| 1) nicht erfindungsgemäß 2) Rezeptur gemäß Tabelle 2 3) Die eingesetzten Rezepturen basierten auf der Rezeptur gemäß Tabelle 1; abgesehen von den unterschiedlichen Mengen an Konservierungsmittel und gegebenenfalls Zinksulfid wurde allein die Menge an Wasser entsprechend angepasst, um zu einer Gesamtmenge von 100,00 Gew.-% zu gelangen. | | | | | | | | |

In Tabelle 3 ist die Intensität des Aufwuchses von Algen und Pilzen auf den Platten beschichtet mit der Anstrichfarbe wiedergegeben. Die Ergebnisse zeigen, dass die nicht filmkonservierte Beschichtung ("ohne Konservierung") bereits nach 3 Jahren einen sichtbaren Bewuchs mit Algen und Pilzen aufwies (Stufe 2 gemäß DIN EN ISO 4628-1:2016-07 (Beschichtungsstoffe - Beurteilung von Beschichtungsschäden - Bewertung der Menge und der Größe von Schäden und der Intensität von gleichmäßigen Veränderungen im Aussehen - Teil 1: Allgemeine Einführung und Bewertungssystem) unter Anwendung von DIN EN 16492:2014-09 (Beschichtungsstoffe - Bewertung von optischen Oberflächenveränderungen verursacht durch Pilze und Algen auf Beschichtungen) und nach 5 bzw. 6 Jahren einen stark ausgeprägten (Stufe 4 gemäß DIN EN ISO 4628-1:2016-07 unter Anwendung von DIN EN 16492:2014-09) bzw. sehr starken Bewuchs (Stufe 5 gemäß DIN EN ISO 4628-1:2016-07 unter Anwendung von DIN EN 16492:2014-09). Im Vergleich zu dieser unkonservierten Beschichtung zeigen die mit den Filmkonservierungsmitteln DCOIT und OIT ausgerüsteten Proben einen deutlich verlangsamten Bewuchs. Erst nach 6 bzw. 7 Jahren wird hier die Stufe 3 (mittel - sehr deutlich sichtbarer Bewuchs) erreicht. Völlig überraschend zeigte sich in der Versuchsserie auch, dass durch den Zusatz von Zinksulfid die Aufwuchsgeschwindigkeit nochmals deutlich reduziert werden konnte, wobei die Stufe 3 (mittel, d.h. sehr deutlich sichtbarer Bewuchs) erst nach einem Zeitraum von 7 bzw. 8 Jahren erreicht wurde und sich dieser Aufwuchs auch in den Folgejahren nicht mehr verschlechterte. Man erkennt auch, dass höhere Konzentrationen an Filmkonservierungsmitteln OIT und DCOIT zu einem nochmals reduzierten Aufwuchsverhalten von Algen und Pilzen über die Zeit führen.

Ein analoges Verhalten in der Freibewitterung konnte auch bei den Versuchsplatten beschichtet mit Fassadenputz festgestellt werden (Tabelle 4). Auch hier zeigen die Freibewitterungsplatten ohne Filmkonservierung bereits nach 4 Jahren eine Aufwuchsintensität der Stufe 5, d.h. sehr starken Bewuchs mit Algen und Pilzen, was sich auch in den Folgejahren nicht mehr verbesserte. Der mit einer bis vor wenigen Jahren marktüblichen Filmkonservierung aus Carbendazim, Terbutryn und OIT ausgerüstete Fassadenputz zeigte ähnlich wie die mit OIT, DCOIT ausgerüsteten Proben ein verzögertes Aufwuchsverhalten der Algen und Pilze, so dass die Stufe 3 erst nach 8 Jahren (Standardkonservierung), 6 Jahren (je 500ppm OIT und DCOIT), 7 Jahren (je 750ppm OIT und DCOIT) und 8 Jahren (je 1000ppm OIT und DCOIT) erreicht wurden. Auch in dieser Serie zeigte sich vollkommen überraschend der Effekt, dass die zusätzlich mit Zinksulfid ausgerüsteten Putzmassen ein nochmals deutlich reduziertes Aufwuchsverhalten aufwiesen und sich bei der mit den höchsten Konzentrationen ausgerüsteten Proben selbst nach 10 Jahren nur ein geringer Bewuchs der Stufe 2 zeigt.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Wässrige Beschichtungsmasse, insbesondere Putzmasse, Armierungsmasse, Spachtelmasse oder Anstrichfarbe, bestehend aus oder enthaltend, insbesondere enthaltend,
a) mindestens ein organisches und/oder anorganisches Pigment und/oder mindestens einen Füllstoff,
b) mindestens ein polymeres organisches Bindemittel,
c) 2-Octyl-2H-isothiazol-3-on (OIT),
d) 4,5-Dichlor-2-octyl-2H-isothiazol-3-on (DCOIT),
e) mindestens ein Additiv und
f) Wasser.

2. Wässrige Beschichtungsmasse nach Anspruch 1, ferner umfassend
g) Zinksulfid und/oder Zinkoxid, insbesondere Zinksulfid.

3. Wässrige Beschichtungsmasse nach Anspruch 1 oder 2, ferner umfassend
h) mindestens ein organisches und/oder anorganisches Fasermaterial.

4. Wässrige Beschichtungsmasse nach einem der vorangehenden Ansprüche, **dadurch gekennzeichnet, dass**
dieses abgesehen von den Komponenten c) und d) frei von Filmkonservierungsmitteln ist, bevorzugt
frei von Filmkonservierungsmitteln, die in der Kategorie 7 der Artikel 95 Liste (Stand 22. Mai 2023) der ECHA (European Chemicals Agency) aufgeführt sind, beispielsweise 2-Thiazol-4-yl-1H-benzoimidazol (Thiabendazol), Diuron, Terbutryn, N-(Dichlorofluoromethylthio)-N',N'-dimethyl-N-phenylsulfamid (Dichlofluanid), Silbernitrat, Carbendazim, p-[(Diiodomethyl)sulfonyl]-toluol, Dimethyloctadecyl-[3-(trimethoxysilyl)propyl]ammoniumchlorid, 3-(4-Isopropyl-phenyl)-1,1-dimethylharnstoff (Isoproturon), 1-[[2-(2,4-Dichlorophenyl)-4-propyl-1,3-dioxolan-2-yl]methyl]-1H-1,2,4-triazol (Propiconazole), 1-(4-Chlorophenyl)-4,4-dimethyl-3-(1,2,4-triazol-1-ylmethyl)pentan-3-ol (Tebuconazole), 2-Butyl-benzo[d]isothiazol-3-on (BBIT), Polymeres quaternäres Ammonium bromide (PQ Polymer), 3-Iodo-2-propynylbutylcarbamat (IPBC), Benzoesäure, N-(Trichloromethylthio)phthalamid (Folpet), Pyridin-2-thiol 1-oxid, Natriumsalz (Natriumpyrithion), Zinkpyrithion, Silberborphosphat-Glas, Silberchlorid, Silberphosphat-Glas, Silber/Zinkzeolithe, Silberzeolithe, Fludioxonil oder Methyl-(E)-2-{2[6-(2-cyanophenoxy)pyrimidin-4-yloxyl]phenyl}-3-methoxyacrylat (Azoxystrobin), und
gegebenenfalls frei von organischen Topfkonservierungsmitteln, die in der Kategorie 6 der Artikel 95 Liste (Stand 22. Mai 2023) der ECHA (European Chemicals Agency) aufgeführt sind,
beispielsweise (Ethylendioxy)dimethanol, Hexa-2,4-diensäure (Sorbinsäure), N-(Trichloromethylthio)phthalimid (Folpet), Tetrahydro-3,5-dimethyl-1,3,5-thiadiazin-2-thion (Dazomet), N-(3-Aminopropyl)-N-docecylpropan-1,3-diamin, 2,2'-Dithiobis-[N-methylben-zamid] (DTBMA), Biphenyl-2-ol, Natrium-2-biphenylat, Methenamin-3-chloroallylochlorid (CTAC), 2,2',2"-(Hexahydro-1,3,5-triazin-1,3,5-triyl)-triethanol (HHT), N,N'-Methylenebismorpholin (MBM), 1,3-Bis(hydroxymethyl)-5,5-dimethyl-imidazolidin-2,4-dion (DMD-MH), 7a-Ethyldihydro-1H,3H,SH-oxazolo[3,4-c]oxazol (EDHO), Dodecylguanidin-monohydrochlorid, Kalium-2-biphenylat, p-[(Diiodomethyl)-sulfonyl]toluol, Kalium-(E,E)-hexa-2,4-dienoat (Kaliumsorbat), 2-Brom-2-(brommethyl)pentanedinitril (DBDCB), 3-Iodo-2-propynylbutylcarbamat (IPBC), Natrium-N-(hydroxymethyl)glycinat, 2-Butyl-benzo[d]-isothiazol-3-on (BBIT), cis-1-(3-Chloroallyl)-3,5,7-triaza-1-azoniaadamantanchlorid (cis CTAC), 2-Methyl-1,2-benzothiazol-3(2H)-on (MBIT), 1,2-Benzisothiazol-3(2H)-on (BIT), Tetrahydro-1,3,4,6-tetrakis-(hydroxymethyl)-imidazol(4,5-d)imidazol-2,5(1H,3H)-dion (TMAD), Didecyldimethylammoniumchlorid (DDAC), Dodecylguanidin-monohydrochloride, Trimethyl-1,3,5-Triazin-1,3,5(2H,4H,6H)-triethanol (HPT), Tetrakis(hydroxymethyl)-phosphoniumsulfat (THPS), 3,3-Methylenbis(5-methyloxazolindin) (MBO), 2-Methyl-2H-isothiazol-3-on (MIT), 5-Chloro-2-methyl-2H-isothiazol-3-on (CIT), (Ethylendioxy)-dimethanol, 2,2-Dibrom-2-cyanoacetamid (DBNPA), Natriumpyrithion, Zinkpyrithion, (Benzyloxy)methanol, Natrium-p-chloro-m-cresolat, 2-Phenoxyethanol, Benzylalkohol, Ethanol, Biphenyl-2-ol, Bronopol, Chlorocresol, Ameisensäure, Glutaraldehyd, Sorbinsäure, Wasserstoffperoxid oder Milchsäure.

5. Wässrige Beschichtungsmasse nach einem der vorangehenden Ansprüche, **gekennzeichnet durch**
mindestens 0,01 Gew.-%, bevorzugt mindestens 0,04 Gew.-% und besonders bevorzugt mindestens 0,09 Gew.-% an DCOIT, insbesondere im Bereich von 0,04 Gew.-% bis 0,3 Gew.-% oder vorzugsweise von 0,09 Gew.-% bis 0,3 Gew.-% an DCOIT, jeweils bezogen auf das Gesamtgewicht der Beschichtungsmasse, und/oder, insbesondere und,
mindestens 0,01 Gew.-%, bevorzugt mindestens 0,04 Gew.-% und besonders bevorzugt mindestens 0,09 Gew.-% an OIT, insbesondere im Bereich von 0,04 Gew.-% bis 0,3 Gew.-% oder vorzugsweise von 0,09 Gew.-% bis 0,3 Gew.-% an OIT, jeweils bezogen auf das Gesamtgewicht der Beschichtungsmasse, und/oder, insbesondere und,
mindestens 1,0 Gew.-%, bevorzugt mindestens 1,5 Gew.-% und besonders bevorzugt mindestens 2,25 Gew.-% an Zinksulfid, insbesondere im Bereich von 1 Gew.-% bis 10 Gew.-%, bevorzugt im Bereich von 1,5 bis 9,0 Gew.-% und besonders bevorzugt im Bereich von 2,25 bis 8,0 Gew.-%, an Zinksulfid, jeweils bezogen auf das Gesamtgewicht der Beschichtungsmasse.

6. Wässrige Putzmasse nach einem der vorangehenden Ansprüche, **gekennzeichnet durch**
mindestens 0,01 Gew.-%, bevorzugt mindestens 0,04 Gew.-% und besonders bevorzugt mindestens 0,09 Gew.-% an DCOIT, insbesondere im Bereich von 0,04 Gew.-% bis 0,3 Gew.-% oder vorzugsweise von 0,09 Gew.-% bis 0,3 Gew.-% an DCOIT, jeweils bezogen auf das Gesamtgewicht der Beschichtungsmasse, und/oder, insbesondere und,
mindestens 0,01 Gew.-%, bevorzugt mindestens 0,04 Gew.-% und besonders bevorzugt mindestens 0,09 Gew.-% an OIT, insbesondere im Bereich von 0,04 Gew.-% bis 0,3 Gew.-% oder vorzugsweise von 0,09 Gew.-% bis 0,3 Gew.-% an OIT, jeweils bezogen auf das Gesamtgewicht der Beschichtungsmasse, und/oder, insbesondere und,
mindestens 1,0 Gew.-%, bevorzugt mindestens 1,5 Gew.-% und besonders bevorzugt mindestens 2,25 Gew.-% an Zinksulfid, insbesondere im Bereich von 1 Gew.-% bis 10 Gew.-%, bevorzugt im Bereich von 1,5 bis 9,0 Gew.-% und besonders bevorzugt im Bereich von 2,25 bis 8,0 Gew.-%, an Zinksulfid, jeweils bezogen auf das Gesamtgewicht der Beschichtungsmasse.

7. Wässrige Anstrichfarbe nach einem der Ansprüche 1 bis 5, **gekennzeichnet durch**
mindestens 0,01 Gew.-%, bevorzugt mindestens 0,05 Gew.-% und besonders bevorzugt mindestens 0,1 Gew.-% an DCOIT, insbesondere im Bereich von 0,05 Gew.-% bis 0,3 Gew.-% oder vorzugsweise von 0,1 Gew.-% bis 0,3 Gew.-% an DCOIT, jeweils bezogen auf das Gesamtgewicht der Beschichtungsmasse, und/oder, insbesondere und,
mindestens 0,01 Gew.-%, bevorzugt mindestens 0,05 Gew.-% und besonders bevorzugt mindestens 0,1 Gew.-% an OIT, insbesondere im Bereich von 0,05 Gew.-% bis 0,3 Gew.-% oder vorzugsweise von 0,1 Gew.-% bis 0,3 Gew.-% an OIT, jeweils bezogen auf das Gesamtgewicht der Beschichtungsmasse, und/oder, insbesondere und,
mindestens 1,0 Gew.-%, bevorzugt mindestens 1,5 Gew.-% und besonders bevorzugt mindestens 2,25 Gew.-% an Zinksulfid, insbesondere im Bereich von 1 Gew.-% bis 10 Gew.-%, bevorzugt im Bereich von 1,5 bis 9,0 Gew.-% und besonders bevorzugt im Bereich von 2,25 bis 8,0 Gew.-%, an Zinksulfid, jeweils bezogen auf das Gesamtgewicht der Beschichtungsmasse.

8. Wässrige Beschichtungsmasse nach einem der vorangehenden Ansprüche, **dadurch gekennzeichnet, dass**
die Komponenten c) und d) jeweils separat geträgert oder verkapselt, insbesondere mikroverkapselt, in der Beschichtungsmasse vorliegen.

9. Wässrige Beschichtungsmasse nach einem der vorangehenden Ansprüche, **dadurch gekennzeichnet, dass**
das mindestens eine Additiv ausgewählt ist aus der Gruppe bestehend aus Verdickern, Koaleszenzmitteln, Entschäumern, Stabilisatoren, pH-Einstellmitteln, Netz- und Dispergiermitteln, Hydrophobierungsmitteln, Mattierungsmitteln, insbesondere Fällungskieselsäure, organische Verfilmungsmittel, Oberflächenadditiven, insbesondere Silikonoberflächenadditiven, beispielsweise polyethermodifiziertes Polymethylalkylsiloxan und/oder Silikonpolyether-Copolymere, und Mischungen dieser Verbindungen.

10. Wässrige Beschichtungsmasse nach einem der vorangehenden Ansprüche, **dadurch gekennzeichnet, dass**
das polymere organische Bindemittel ausgewählt ist aus der Gruppe bestehend aus Vinylacetat/Ethylen-Copolymeren, Copolymeren auf Basis von Vinylaromaten, insbesondere gebildet aus Styrol und (Meth)acrylaten, vorzugsweise Butylacrylaten, Copolymeren auf Basis von Acrylaten und gegebenenfalls Methacrylaten, insbesondere Reinacrylate, Hybridbindemitteln, insbesondere in Form wässriger Organosilikat-Hybriddispersionen, und beliebigen Mischungen hiervon und insbesondere mindestens ein Reinacrylat, insbesondere Acryl/Methacrylsäureester-Copolymer, und/oder, insbesondere und, mindestens ein Hybrid-Bindemittel umfasst.

11. Wässrige Beschichtungsmasse nach einem der vorangehenden Ansprüche, **dadurch gekennzeichnet, dass**
diese einen pH-Wert kleiner 11,0, bevorzugt von nicht mehr als 10,75 und besonders bevorzugt von nicht mehr als 10,5 aufweist und insbesondere im Bereich von 7,5 bis 10,0 liegt.

12. Beschichtung, erhalten oder erhältlich aus einer Beschichtungsmasse nach einem der Ansprüche 1 bis 11.

13. Substrat, enthaltend eine beschichtbare Oberfläche und auf dieser beschichtbaren Oberfläche eine Beschichtung nach Anspruch 12.

14. Verwendung der wässrigen Beschichtungsmasse nach einem der Ansprüche 1 bis 11 für die Herstellung von gegen mikrobielle Schädigung geschützten Beschichtungen, insbesondere für die Herstellung von Beschichtungen, die eine Resilienz gegen Algen- und/oder, insbesondere und, Pilzwachstum aufweisen oder für die Filmkonservierung von Beschichtungsaufträgen, insbesondere von Farb- oder Putzbeschichtungen.

15. Verwendung nach Anspruch 14, **dadurch gekennzeichnet, dass** die wässrige Beschichtungsmasse eine Putzmasse, Armierungsmasse, Spachtelmasse oder Anstrichfarbe darstellt, insbesondere eine Putzmasse oder Anstrichfarbe, vorzugsweise für ein Wärmedämmverbundsystem.
